# EUROPÄISCHE PATENTSCHRIFT

(11) **EP 0 893 313 B1**
(45) Veröffentlichungstag und Bekanntmachung des Hinweises auf die Patenterteilung: **14.01.2004**
(21) Anmeldenummer: 98112717.8
(22) Anmeldetag: 09.07.1998
(51) Int. Cl.: B60R 22/44, B60R 22/46

(54) **Vorrichtung zum Aufrollen eines Sicherheitsgurtbandes**
Safety belt reeling device
Dispositif d'enroulement d'une ceinture de sécurité

(30) Priorität: 23.07.1997 DE 19731689
(43) Veröffentlichungstag der Anmeldung: 27.01.1999
(73) Patentinhaber: BREED AUTOMOTIVE TECHNOLOGY, INC., Lakeland, FL 33807-3050 (US)
(72) Erfinder: Specht, Martin, 82340 Feldafing (DE)
(74) Vertreter: Nöth, Heinz, Dipl.-Phys.

(56) Entgegenhaltungen:
- GB-A- 2 304 540
- US-A- 3 880 364
- US-A- 4 534 441
- US-A- 4 714 274
- US-A- 5 181 739
- US-A- 5 607 118

## Beschreibung

Die Erfindung betrifft eine Vorrichtung nach dem Oberbegriff des Patentanspruches 1.

Eine derartige aus der US-A-4,534,441 bekannte Vorrichtung zum Aufrollen eines Sicherheitsgurtes besitzt ein zwischen Wickelwelle und Elektromotor angeordnetes Getriebe, welches in Abhängigkeit von Sensorsignalen in unterschiedliche Schaltstellungen gesteuert werden kann. In den verschiedenen Schaltstellungen wird die Gurtbandlose des Sicherheitsgurtes in Abhängigkeit von bestimmten Fahrsituationen eingestellt.

Bei einer aus DE-A-43 32 205 bekannten Vorrichtung wird in einem Dreipunkt-Sicherheitsgurtsystem das vom Elektromotor gelieferte Drehmoment zur Verbesserung des Gurtbandtragekomforts bei angelegtem Sicherheitsgurt und zur Erzielung einer Vorstrafferfunktion unterhalb der für die Leistungsstraffung kritischen Grenze zur Einwirkung gebracht..

Aufgabe der Erfindung ist es, eine Vorrichtung der eingangs genannten Art zu schaffen, welche in einer Baueinheit die von einem Sicherheitsgurtsystem, insbesondere Dreipunkt-Sicherheitsgurtsystem, geforderten Funktionen universell erfüllt.

Diese Aufgabe wird erfindungsgemäß durch die kennzeichnenden Merkmale des Patentanspruches 1 gelöst.

Unter Einsatz einer rechnergestützten Auswertung der Sensorsignale erzielt man bei der Erfindung eine universelle Verwirklichung der von einem Sicherheitsgurtsystem in einem Kraftfahrzeug geforderten Funktionen. Diese Funktionen werden von einer Baueinheit erfüllt, welche den Gurtaufroller beinhaltet. Die Integration in eine den Gurtaufroller aufweisenden Baueinheit gelingt dadurch, daß das Getriebe drei verschiedene Getriebeschaltpositionen einnehmen kann. Bei der ersten Getriebeschaltposition erfolgt eine Einstellung des Gurtbandtragekomforts, bei einer zweiten Getriebeschaltposition die Einstellung der Gurtkraftbegrenzung, und in einer dritten Getriebeschaltposition kann die Straffung des Gurtbandes durchgeführt werden. Für das Erreichen der verschiedenen Funktionen wird das Motordrehmoment ausgenützt. Der verwendete Elektromotor ist bevorzugt als Flachmotor ausgebildet, wie er beispielsweise in der DE-A-43 02 042 beschrieben ist. Dieser Elektromotor kann unter Zwischenschaltung des Getriebes an einer Seite des Gurtaufrollers am Rahmen angeordnet werden. Die verschiedenen Getriebeschaltstellungen können mit Hilfe eines oder mehrerer Verstellelemente, z.B. pyrotechnische Stellelemente oder Elektromagnete, die von der rechnergestützten Auswerteeinrichtung angesteuert werden, eingestellt werden.

Zur Erzielung des Gurtbandtragekomforts kann die erste Getriebeschaltposition in Abhängigkeit von Sensorsignalen, welche das Angurten oder das Abgurten angeben, in die erste Schaltposition gesteuert werden. Bei dieser Getriebeschaltposition wirkt das Drehmoment des Elektromotors auf die Rückholkraft der am Gurtaufroller vorhandenen Triebfeder ein. Dies kann in der Weise erfolgen, daß der Triebfederarbeitspunkt verstellt wird. Die Parkposition des Sicherheitsgurtes, d.h. die vollständig auf der Wickelwelle aufgerollte Gurtbandlänge ist eine definierte Ausgangsposition. Ausgehend von dieser Ausgangsposition kann beim Angurten die abgewickelte Gurtbandlänge bis zum Angurtpunkt erkannt werden und ein entsprechendes Sensorsignal erzeugt werden. In Abhängigkeit von diesem den Angurtpunkt angebenden Sensorsignal wird durch den Elektromotor die äußere Triebfedereinhängung, d.h. der Abstützpunkt, mit welchem sich die Triebfeder gegenüber dem Fahrzeug abstützt, nachgestellt. Beispielsweise kann dieser Einhängepunkt in einem Ring gelagert sein, welcher proportional der abgewickelten Gurtbandlänge nachgestellt wird, bis der gewünschte Komfort-Tragepunkt erreicht wird. Diese Nachstellbewegung wird vom Elektromotor über das in die erste Schaltposition eingestellte Getriebe geliefert.

Beim Abgurten, welches durch ein beispielsweise am Gurtschloß abgegriffenes Sensorsignal festgestellt wird, erhält der Elektromotor ein Rückwickelsignal, durch welches der äußere Einhängepunkt der Feder wieder in die Ausgangsposition zurückgedreht wird, so daß ein starkes Triebfederrückzugsmoment auf die Wickelwelle und das Gurtband ausgeübt wird. Vom Elektromotor kann auch ein additives Drehmoment zur Erhöhung der auf das abgegurtete Band wirkenden Rückzugskraft geliefert werden.

Das für den Tragekomfort erwünschte Rückzugsmoment kann während des normalen Fahrbetriebs auch durch eine Permanentdrehmomentenregelung, die vom Elektromotor über das auf die erste Schaltposition eingestellte Getriebe bewirkt wird, ständig nachgeregelt werden. Dies kann beispielsweise durch Vergleich des jeweiligen Istwertes des Komforttragedrehmoments mit einem beispielsweise in der zentralen Auswerteeinrichtung gespeicherten Sollwert für dieses Drehmoment erfolgen.

In der zweiten Getriebeschaltposition kann durch das vom Elektromotor gelieferte Drehmoment ein Gurtkraftbegrenzer, welcher bevorzugt zwischen dem Rahmen oder gestell- bzw. ortsfesten Elementen und der Wickelwelle wirkt, eingestellt werden. Ein derartiger Gurtstraffbegrenzer ist beispielsweise in der DE-A-196 40 842 beschrieben. Der Gurtkraftbegrenzer beruht darauf, daß durch die Gurtauszugskraft aufgebrachte Energie, welche vom vorverlagerten Körper des angegurteten Fahrzeuginsassen erzeugt wird, durch Reibung von sich gegeneinander bewegenden Teilen teilweise absorbiert wird. Bei Überschreiten eines Schwellenwertes bewegt sich dabei der Teil der Wikkelwelle, auf welchem das Gurtband aufgewickelt ist, gegenüber einem insbesondere am Rahmen des Gurtaufrollers abgestützten und festgehaltenen Teil, wobei im Gurtkraftbegrenzer durch Reibungskraft Energie absorbiert bzw. in Wärme umgesetzt wird. Das Last- bzw. Kraftbegrenzungsverhalten wird in bevorzugter Weise aufgrund eines oder mehrerer aktueller Parameter, wie Gewicht der zu sichernden angegurteten Person und/oder Position des Fahrzeugsitzes, insbesondere in Fahrzeuglängsrichtung, und/oder der Unfallschwere, für welche als Kenngröße die Beschleunigungsänderung festgestellt werden kann, z.B. durch Kennfeldsteuerung eingestellt werden. Hierfür werden entsprechende Sensorsignale erzeugt, die in die zentrale rechnergestützt arbeitende Auswerteeinrichtung eingegeben und dort für die Steuerung ausgewertet werden.

Hierzu kann während des Einsteigens beim Angurten das Gewicht des Fahrzeuginsassen mit Hilfe entsprechender Meßeinrichtungen und gegebenenfalls seine Sitzposition im Fahrzeugsitz erfaßt werden. Unter Ausnützung der gewonnenen Sensorsignale kann dann die Voreinstellung des Gurtbandbegrenzers vorgenommen werden.

Ferner kann die Einstellung des Gurtkraftbegrenzers durch Unfallfrüherkennung, insbesondere mit Hilfe von Pre-Crash-Sensorsignalen eingestellt werden. Als zusätzlicher Signalgeber kann auch ein die Bremspedalbetätigung erfassendes Sensorsignal ausgenützt werden. In Abhängigkeit von der Unfallschwere kann eine Nachstellung des Kraftbegrenzers auch während des Unfallgeschehens durch das Elektromotordrehmoment, welches dann auch gegebenenfalls direkt auf die Wickelwelle übertragen werden kann , erfolgen.

Die Einstellung des Gurtkraftbegrenzers erfolgt bevorzugt reversibel und wiederholbar. Hierzu kann eine vom Elektromotor erzeugte Drehbewegung in eine zur Wickelwellenachse parallele Stellbewegung, beispielsweise mit Hilfe eines Gewindeeingriffes, welchen ein vom Elektromotor in Drehung versetztes Einstellelement hat, gewandelt werden.

In der dritten Schaltposition des Getriebes kann das vom Elektromotor gelieferte Drehmoment zum Straffen des Gurtbandes auf die Wickelwelle übertragen werden. Die dritte Schaltposition des Getriebes wird durch ein Sensorsignal aktiviert, welches beispielsweise von einem Crashsensor herkömmlicher Bauart erzeugt wird. Bei dieser dritten Schaltposition kann auch eine Vorstraffung, wie sie in der DE-A-43 32 205 beschrieben ist, bewirkt werden. Ferner kann die dritte Schaltposition dann eingestellt werden, wenn der angegurtete Fahrzeuginsasse auf dem Fahrzeugsitz eine Out-Off-Position, beispielsweise eine extrem nach vorne geneigte oder seitlich geneigte Stellung, z.B. beim Schlafen, einnimmt. Vom Elektromotor kann dann ein Drehmoment erzeugt werden, durch welches der Fahrzeuginsasse in eine normale Sitzposition zurückgezogen wird. Diese Positionierungsstraffung ist ein reversibler Vorgang, welcher wiederholt werden kann. Hierdurch wird dem Fahrzeuginsassen auch eine spürbare Sicherheit vermittelt.

Von erheblichem Vorteil ist diese Positionierungsstraffung bei Ausnützung der eine Unfallfrüherkennung angebenden Sensorsignale. Derartige Sensorsignale können durch Nährungssensoren unter Ausnützung der Fahrzeuggeschwindigkeit gewonnen werden. Der Fahrzeuginsasse wird dann vor oder zu Beginn des Unfalls aus einer eventuellen Out-Off-Position in eine für das Unfallgeschehen optimierte Position gebracht.

Es ist auch möglich, in der dritten Schaltstellung eine elektromotorische Gurtbandstraffung mit Überlast, insbesondere bei einem schweren Unfall durch das übertragene Motordrehmoment auszulösen. Hierbei wird ein einmaliger Überlastrückzug auf das Gurtband ausgeübt. Damit werden für einen kurzen Zeitraum sehr starke Gurtbandrückzugskräfte erzeugt. Diese Maßnahme ist auch bei einem Zweitaufprall oder Fahrzeugüberschlag von Vorteil. U.U. kann bei dieser Anwendung der Elektromotor durch Überlast zerstört werden.

In Abhängigkeit von den jeweiligen Schaltstellungen des Getriebes und der Sensorsignale, welche an die rechnergestützt arbeitende zentrale Auswerteeinrichtung abgegeben werden, kann das jeweilige vom Elektromotor erzeugte Drehmoment eingestellt werden. Hierzu wird die dem Elektromotor zugeführte Stromstärke entsprechend eingestellt.

Bei einer weiteren Ausführungsform der Erfindung wird ein Elektromotor mit zwei Ausgangswellen verwendet. Der Elektromotor kann in Abhängigkeit von der jeweiligen Fahrsituation, insbesondere von der zentralen Steuereinrichtung (CPU), angesteuert werden. Hierbei erfolgt die Ansteuerung so, daß von der ersten Ausgangswelle eine Einstellung der von der Triebfeder auf die Wickelwelle übertragene Kraft, insbesondere Rückstellkraft, bewirkt wird und von der zweiten Ausgangswelle eine Antriebskraft in Aufwickelrichtung übertragen wird. Die erste Ausgangswelle des Elektromotors wird in bevorzugter Weise auf die Triebfeder, die an einer Seite der Wickelwelle vorgesehen ist. Hierbei wird bevorzugt eine Komfortanpassung des angelegten Sicherheitsgurtes erreicht. Die Drehbewegung der ersten Ausgangswelle des Elektromotors kann über ein geeignetes Getriebe, welches eine ständige Antriebsverbindung zwischen der Ausgangswelle und der Triebfeder herstellt, übertragen werden. Dieses Getriebe kann ein Riemengetriebe oder Zahnradgetriebe sein. Die erste Ausgangswelle wirkt hierbei bevorzugt auf den Einhängepunkt der Triebfeder an dem Ende, welches entgegengesetzt liegt zum Federende, das mit der Wickelwelle verbunden ist. Durch die Verstellung des Einhängepunktes, der über das Getriebe und den Elektromotor am Gurtaufrollerrahmen abgestützt ist, läßt sich eine Komfortanpassung des Tragekomforts des angelegten Sicherheitsgurtes erreichen.

Die zweite Ausgangswelle des Elektromotors greift in bevorzugter Weise an der zur Triebfeder entgegengesetzt liegenden Seite an der Wickelwelle an. Die Übertragung der Antriebskraft der zweiten Ausgangswelle auf die Wickelwelle kann über ein Getriebe, welches bevorzugt als Zahnradgetriebe ausgebildet ist, erfolgen. Das Getriebe ist in bevorzugter Weise so ausgebildet, daß es durch die Antriebsbewegung der zweiten Ausgangswelle selbsttätig in die eingekuppelte Stellung gebracht wird, so daß die Ausgangswelle in Antriebsverbindung mit der Wickelwelle gebracht wird.

Die beiden Ausgangswellen des Elektromotors können mit getrennten, jeweils zugeordneten Ankern verbunden sein und als separate Ausgangswellen des Elektromotors ausgebildet sein. In bevorzugter Weise wird jedoch eine Motorwelle verwendet, deren stirnseitig überstehende Wellenstummel die erste und zweite Ausgangswelle bilden. Diese Motorwelle ist mit einem Motoranker verbunden.

Durch die zweite Ausgangswelle kann in bevorzugter Weise die Wickelwelle nach dem Lösen des Gurtschlosses in Aufwickelrichtung angetrieben werden, so daß das Gurtband in seine Parkposition gebracht wird. Beim Lösen des Gurtschlosses kann hierzu ein entsprechendes Signal für die Ansteuerung des Elektromotors erzeugt werden.

Ferner ist es möglich, durch die zweite Ausgangswelle des Elektromotors die Wickelwelle in Aufwickelrichtung für eine Precrash-Straffung des Gurtbandes anzutreiben. Hierzu kann beispielsweise bei der Aktivierung des ABS-Systems des Fahrzeugs ein entsprechendes Signal erzeugt werden. Ein derartiges Signal kann jedoch auch in Abhängigkeit von einem bestimmten Betätigungsdruck am Bremspedal erzeugt werden. In gefährlichen Fahrsituationen wird durch diese Precrash-Straffung des Gurtbandes für den Fahrer eine zusätzliche Sicherheit erreicht.

Bei der Ausführungsform, bei welcher eine einzige starre durchgehende Motorwelle verwendet wird, deren stirnseitig überstehende Wellenstummel die beiden Ausgangswellen bilden, wird beim Aufwickeln des Gurtbandes für die Straffung bzw. für das Zurückbringen des Gurtbandes in seine Parkposition an der Federseite der Aufhängepunkt der Feder so bewegt, daß die Rückstellkraft der Triebfeder erhöht wird. Hierdurch wird die erwünschte Funktion des Zurückbringens des Gurtbandes in seine Parkposition oder die Funktion des Gurtstraffens nicht beeinträchtigt. Durch die Erhöhung der Rückstellkraft der Tiebfeder wird eine diese Funktionen unterstützende Wirkung erreicht.

In bevorzugter Weise ist die zweite Ausgangswelle von der Wickelwelle abgekoppelt, wenn die erste Ausgangswelle die Tragekomfortanpassung an der Federseite durchführt. Ferner kann eine Abfragung der von der Wickelwelle abgewickelten Gurtbandlänge durchgeführt werden, wobei die Steuerung des Antriebes der jeweiligen Ausgangswelle in Abhängigkeit von der jeweils abgewickelten Gurtbandlänge erfolgt.

Für die Abtastung bzw. Abfrage der jeweils von der Wickelwelle abgewickelten Gurtbandlänge kann eine sich mit der Wickelwelle mit untersetzter Drehzahl mitdrehende Abfrageeinrichtung vorgesehen sein, die eine von der jeweiligen Gurtbandlänge abhängige Drehwinkelposition einnimmt. Hierzu kann beispielsweise ein aus der DE-A-43 14 153 bei einer Kindersicherung zum Einsatz kommendes Taumelgetriebe mit einem Getriebering zum Einsatz kommen. Dabei wirkt der exzentrisch zur Wickelwellenachse angeordnete Getriebering, welcher mit einem auf der Wickelwellenachse sitzenden Zahnrad kämmt, als sich mit untersetzter Drehzahl mitdrehende Abfrageeinrichtung, die eine von der jeweiligen abgewickelten Gurtbandlänge abhängige Drehwinkelposition einnimmt. Ein der jeweiligen Drehwinkelposition proportionales elektrisches Signal kann für die zentrale Steuereinrichtung (CPU) erzeugt werden.

Anhand der Figuren wird die Erfindung noch näher erläutert. Es zeigt:
- Fig. 1: ein Blockschaltbild eines Ausführungsbeispiels der Erfindung;
- Fig. 2: eine erste Ausführungsform eines Multifunktionsgurtaufrollers;
- Fig. 3: Komfortprinzipkurven, welche die Aufrollkraft für einen Gurtbandauf- und -rückzug in Abhängigkeit von der auf der Wickelwelle aufgewickelten Länge wiedergeben;
- Fig. 4: Darstellungen zur Gewinnung eines Kennfeldes der Gurtkraft zur Einstellung eines Gurtkraftbegrenzers;
- Fig. 5: Belastungskurven des zeitlichen Gurtbelastungsablaufs auf eine verunfallte Person bei einem Gurtautomaten ohne Lastbegrenzer und bei Anwendung eines Lastbegrenzers, der im Ausführungsbeispiel der Erfindung ist;
- Fig. 6: eine perspektivische Darstellung eines weiteren Ausführungsbeispiels der Erfindung an der Federseite des Gurtaufrollers;
- Fig. 7: eine Seitenansicht der Federseite des Ausführungsbeispiels der Fig. 6;
- Fig. 8: eine perspektivische Darstellung des Ausführungsbeispiels der Fig. 6 an der anderen Seite des Gurtaufrollers; und
- Fig. 9: eine Seitenansicht der zur Federseite entgegengesetzt liegenden Gurtaufrollerseite; und
- Fig. 10: eine Frontansicht des Ausführungsbeispiels.

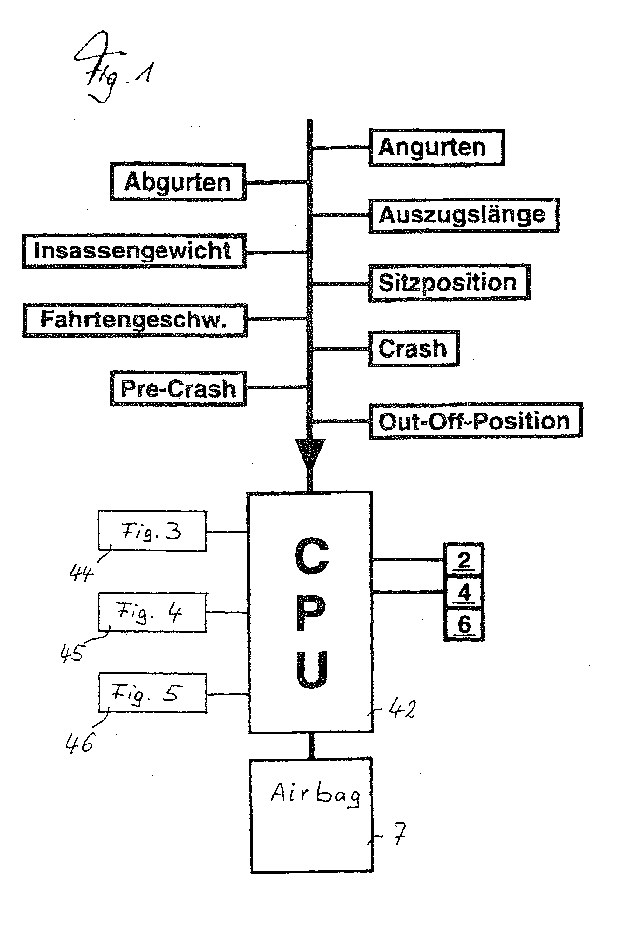

Wie die Fig. 2 zeigt, ist die Vorrichtung zum Aufrollen eines Sicherheitsgurtbandes, mit welchem neben der Gurtaufrollerfunktion ferner eine Gurtbandtragefunktion, eine Kraftbegrenzerfunktion und eine Strafferfunktion ausgeübt werden, in einer den Gurtaufroller enthaltenden Baueinheit integriert. Diese Baueinheit besitzt eine Wickelwelle 1, auf welche ein Gurtband 32 in bekannter Weise zwischen Wellenflanschen 8 um eine Wickelwellenachse 19, z.B. beim Abgurten, aufgewickelt wird und beim Gurtanlegen abgewikkelt wird. In herkömmlicher Weise wirkt auf die Wickelwelle 1 eine Triebfeder 9 mit einer Rückzugskraft, durch welche die Wickelwelle in Gurtbandaufwickelrichtung angetrieben wird. Die Triebfeder 9 wirkt über einen als Federherz 17 ausgebildeten inneren Einhängepunkt, welcher mit der Wickelwelle 1, insbesondere einem noch zu erläuternden Einstellteil 21 an der linken Seite der Wickelwelle, bevorzugt starr verbunden ist, auf die Wickelwelle. Zur Erzielung der Gurtaufrollerfunktionen kann in bekannter Weise eine sensorbetätigte Aufrollermechanik 20 vorgesehen sein, welche bei überhöhten Beschleunigungen fahrzeugsensitiv und/oder gurtbandsensitiv zur Blockierung der Wickelwelle 1 und insbesondere wenigstens eines der beiden Einstellteile 21 am Rahmen 3 aktivierbar ist. Diese Aufrollermechanik 20 des Gurtaufrollers kann an der Wickelwellenseite, an weicher ein Elektromotor 2 und ein Getriebe 4 vorgesehen sind, oder zwischen der Triebfeder 9 und der Wickelwelle 1 angeordnet sein.

Der Elektromotor 2 ist in Flachbauweise ausgebildet und kann einen Aufbau, wie er beispielsweise aus der DE-A-43 02 042 bekannt ist, aufweisen. Eine Motorwelle 11, welche mittig aus dem Motoraufbau des Elektromotors 2 herausgeführt ist, fluchtet mit der Wickelwellenachse 19. Die Motorwelle 11 besitzt eine Wellenverlängerung 15, welche axial durch ein axial sich erstreckendes Lagerteil 33 und somit den Wellenkörper der Wickelwelle 1, das Federherz 17 und die Triebfeder 9 hindurchgeführt ist. Die Wellenverlängerung 15 ist am einen Ende starr mit der Motorwelle 11 verbunden. An ihrem anderen Ende ist sie mit einem Stellglied 10 verbunden, mit welchem ein äußerer Einhängepunkt 16 der Triebfeder 9 durch Drehung um die Wickelwellenachse 19 bzw. Achse des Federherzens 17 in seiner Lage, wie im einzelnen noch erläutert wird, verstellt werden kann.

Zwischen dem Wellenteil, auf welchem das Gurtband 32 zwischen den beiden Wellenflanschen 8 aufgewickelt wird und dem im normalen Gurtaufrollerbetrieb mit der Wickelwelle 1 mitdrehbaren Einstellteil 21 ist ein Gurtkraftbegrenzer 5, beispielsweise in Form einer Lamellenkupplung, angeordnet. Beim dargestellten Ausführungsbeispiel der Fig. 2 ist an beiden Seiten der Wickelwelle 1 ein Lamellenpaket des Gurtkraftbegrenzers 5 zwischen den Wellenflanschen 8 und dem axial verschiebbaren Einstellteil 21 vorgesehen. Ein derartiger Gurtkraftbegrenzer ist in der DE-A-196 40 842 beschrieben. Zur Einstellung der Gurtkraftbegrenzung wird das Drehmoment des Elektromotors 2, wie im einzelnen noch erläutert wird, auf das gegenüber der Wickelwelle 1 axial verschiebbare Einstellteil 21 übertragen. Durch die Axialverschiebung des Einstellteiles wird das Last- bzw. Kraftbegrenzungsverhalten des Gurtkraftbegrenzers 5 in Abhängigkeit von den geeigneten Sensorsignalen, insbesondere Insassengewicht, Sitzposition, Unfallschwere und gegebenenfalls Bremspedalbetätigung, wie im einzelnen noch erläutert wird, eingestellt.

Zur Erzielung der Strafferwirkung wird das Drehmoment des Elektromotors 2 ebenfalls über das Getriebe 4 auf die Wickelwelle 1 übertragen. Das Getriebe 4 besteht im wesentlichen aus zwei Getrieberädern, nämlich einem ersten Getrieberad 13 mit Verzahnung 39 und einem zweiten Getrieberad 14 mit Verzahnung 40, die um unterschiedliche Achsen 34 und 35 drehbar am Rahmen 3 gelagert sind. Das erste Getrieberad 13 steht in Zahneingriff 37 mit einem vom Elektromotor 2 gegebenenfalls über eine Kupplung verbundenen Antriebszahnrad 12. Das Antriebszahnrad 12 kann über die schon angesprochene Kupplung, die durch axiale oder radial verstellbare Kupplungselemente aktivierbar ist, oder starr mit der Motorwelle 11 verbunden sein. Das zweite Getrieberad 14, welches ebenfalls als Zahnrad ausgebildet sein kann, steht in Zahneingriff 36 mit einer Verstellmutter 22, welche mit dem Einstellteil 21 verbunden ist. Durch die mittels des zweiten Getrieberades 14 übertragene Drehbewegung erfolgt eine axiale Verschiebung der Verstellmutter 22 und damit des Einstellteils 21, wie es im einzelnen in der DE-A-196 40 842 beschrieben ist. Dadurch wird das Last- bzw. Kraftbegrenzungsverhalten des Gurtkraftbegrenzers 5 eingestellt. Die Verstellmutter 22 ist durch einen Gewindeeingriff 47 an dem die Wickelwelle 1 durchsetzenden und lagernden Lagerteil 33, welcher am Rahmen 3 abgestützt ist, axial verschiebbar.

Im Ausführungsbeispiel der Fig. 2 sind die beiden Getrieberäder 13 und 14 am Rahmen 3 drehbar um die Achsen 34 und 35 gelagert.

Ferner besitzt wenigstens einer der beiden Wellenflansche 8 einen äußeren Zahnkranz 41, um eine Antriebsdrehverbindung mit dem ersten Getrieberad 13 oder eine Blockierung der Wickelwellendrehung herzustellen, wie im einzelnen noch erläutert wird.

Die Wirkungsweise der dargestellten Ausführungsform ist folgende:

Das Getriebe 4 kann in drei verschiedene Schaltpositionen gebracht werden. In der ersten Getriebeschaltposition kann der Gurtbandtragekomfort eingestellt werden. In der zweiten Getriebeschaltposition kann die Gurtbandkraftbegrenzung eingestellt werden, und in der dritten Schaltposition kann auf die Wickelwelle eine Strafferfunktion ausgeübt werden. Um die verschiedenen Getriebeschaltpositionen zu verwirklichen, sind Antriebsverbindungsmittel und Blockiereinrichtungen vorgesehen, mit denen zwischen den Zahnkränzen 39, 41 und 40 der Getrieberäder 13, 14 und an den Wickelwellenflanschen 8 Drehantriebsverbindungen und Blockierungen durchgeführt werden können. Bei der Ausführungsform der Fig. 2 ist hierzu ein erstes Einstellmittel 23 vorgesehen, welches zwei gemeinsam um eine Achse 24 drehbare drehfest miteinander verbundene Zahnkränze 25 und 26 aufweist. Das erste Einstellmittel 23 besitzt außerdem ein Blockierelement in Form eines Blockierzahnes 31. Ferner besitzt dieses Ausführungsbeispiel ein zweites Einstellmittel 27 mit zwei im Abstand voneinander angeordneten drehfest miteinander verbundenen Zahnkränzen 29 und 30, welche um eine gemeinsame Achse 28 drehbar sind. Die beiden Einstellmittel 23 und 27 können wechselseitig mit den Verzahnungen 30, 40, 41 der Getrieberäder 13, 14 und der Wickelwelle 1 mit Hilfe einer ansteuerbaren Betätigungseinrichtung 38, die elektromagnetisch, elektromechanisch oder ähnlich arbeitet, in Eingriff gebracht werden.

Die Einstellmittel 23 und 27 können als separat betätigbare Einstellmittel oder mittels einer Wippe um eine Wippenachse betätigbare Einstellmittel ausgebildet sein. Zur Betätigung der Einstellmittel können ein oder mehrere ansteuerbare Elektromagnete oder dergleichen verwendet werden.

Zur Einstellung der ersten Getriebeschaltposition werden die Einstellmittel 23 und 27 außer Eingriff mit den Verzahnungen 39 bis 41 der Getrieberäder und der Wickelwelle gehalten. Das Drehmoment des Elektromotors 2 wird in dieser Schaltstellung von der Motorwelle 11 über die Wellenverlängerung 15 auf das Stellglied 10 übertragen. Diese Getriebeschaltposition ist dann veranlaßt, wenn durch entsprechende Sensorsignale das Angurten oder Abgurten zu einer zentralen rechnergestützten Auswerte- und Steuereinrichtung 42 (CPU Fig. 1) gemeldet wird. Beim Angurten wird in Abhängigkeit von Komfortprinzipkurven (Fig. 3), welche in einem oder mehreren mit der zentralen Auswerteund Steuereinrichtung 42 verbundenen Speichern 44 gespeichert sind, eine Verstellung des äußeren Einhängepunktes 16 der Triebfeder 9 mit Hilfe des vom Elektromotor 2 gelieferten Drehmoments bewirkt. Die Auswerte- und Steuereinrichtung 42 steuert hierzu den dem Elektromotor 2 zugeführten Strom. In Abhängigkeit von der Gurtbandauszugslänge (Abszisse in Fig. 3), für welche der Einrichtung 42 ebenfalls ein entsprechendes Sensorsignal zugeleitet wird, erfolgt die Verstellung des äußeren Einhängepunktes 16 bis die dem Komfort-Tragepunkt entsprechende Aufrollkraft bzw. Rückzugskraft (Ordinate in Fig 3) der Triebfeder 9 auf das angelegte Gurtband erreicht ist.

Beim Abgurten wird der Auswerte- und Steuereinrichtung 42 ebenfalls ein, beispielsweise am Gurtschloß abgegriffenes Sensorsignal, zugeleitet. Um auf das auf die Wickelwelle 1 aufzurollende Gurtband eine erhöhte Aufrollkraft zur Einwirkung zu bringen, wird der äußere Einhängepunkt 16 der Triebfeder durch vom Elektromotor 2 vermittelte Drehung des Stellgliedes 10 in seine Ausgangsposition zurückgebracht. Das Gurtband wird dann vollständig bis in seine Parkposition auf die Wickelwelle 1 aufgewickelt. Um das Gurtband in seine Parkposition zu bringen, ist es jedoch auch möglich, die unten noch zu erläuternde dritte Schaltposition des Getriebes 4 einzustellen, in welcher die Antriebsdrehbewegung des Elektromotors 2 über die Getrieberäder auf die Wickelwelle 1 in Aufrollrichtung aufgebracht wird. Die Figur 3 zeigt in den strichlierten Kurven die Aufrollkräfte beim Gurtbandauszug und -einzug in Abhängigkeit von der jeweiligen Auszugslänge ohne Komfort und in den ausgezogenen Kurven (Komfortkurven) mit Komfortwirkung.

In der erläuterten ersten Getriebeschaltstellung drehen die Getrieberäder 13 und 14 frei mit. Die für das Aufrollen des Gurtbandes in die Parkposition erforderliche Aufrollkraft wird von der Triebfeder 9 über das Federherz 17 auf die Wickelwelle 1 übertragen. Für die Drehbewegung der Wickelwelle 1 im Rahmen 3 und gegenüber dem durchgeführten Lagerteil 33 sind Wälzlager 18 vorgesehen.

Die zweite Getriebeschaltposition wird dann eingestellt, wenn der Fahrzeuginsasse auf dem Fahrzeugsitz Platz genommen hat und den Sicherheitsgurt angelegt hat. In der zweiten Getriebeschaltposition wird bei der Ausführungsform der Fig. 2 durch entsprechende Ansteuerung der Betätigungseinrichtung 38 von der Auswerte- und Steuereinrichtung 42 das Einstellmittel 23 mit den Verzahnungen 39, 40 und 41 in Eingriff gebracht. Hierdurch wird eine Antriebsdrehverbindung zwischen den beiden Getrieberädern 13 und 14 über die drehfest miteinander verbundenen Zahnkränze 25 und 26 hergestellt. Durch den Blockiereingriff des Blockierzahnes 31 in die Verzahnung 40 der Wickelwelle 1 werden die Wickelwelle 1 und die starr mit ihr verbundenen Wellenflansche 8 gegen eine Drehung blockiert.

Bei dieser Getriebeschaltstellung wird die vom Elektromotor 2 erzeugte Drehbewegung über die beiden Getrieberäder 13 und 14 auf die Verstellmutter 22, welche auf das Einstellteil 21 des Gurtkraftbegrenzers 5 für eine axiale Stellbewegung wirkt, übertragen. Die Steuerung der axialen Stellbewegung erfolgt durch die Auswerte- und Steuereinrichtung 42 (Fig. 1). Diese empfängt Sensorsignale, welche proportional dem Gewicht des Fahrzeuginsassen sind, sowie Sensorsignale, welche die Position des Fahrzeugsitzes im Fahrzeug in Längsrichtung angeben. Aus diesen Sensorsignalen wird eine Voreinstellung des Kraftbegrenzungsverhaltens des Gurtkraftbegrenzers 5 durch entsprechende axiale Verschiebung der Verstellmutter 22 und des Einstellteils 21 hergestellt.

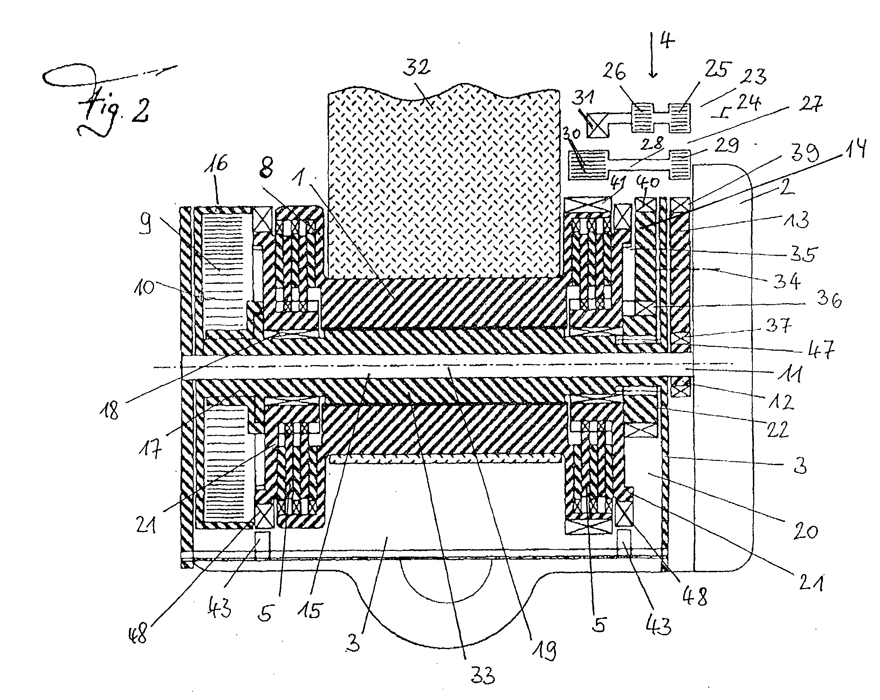

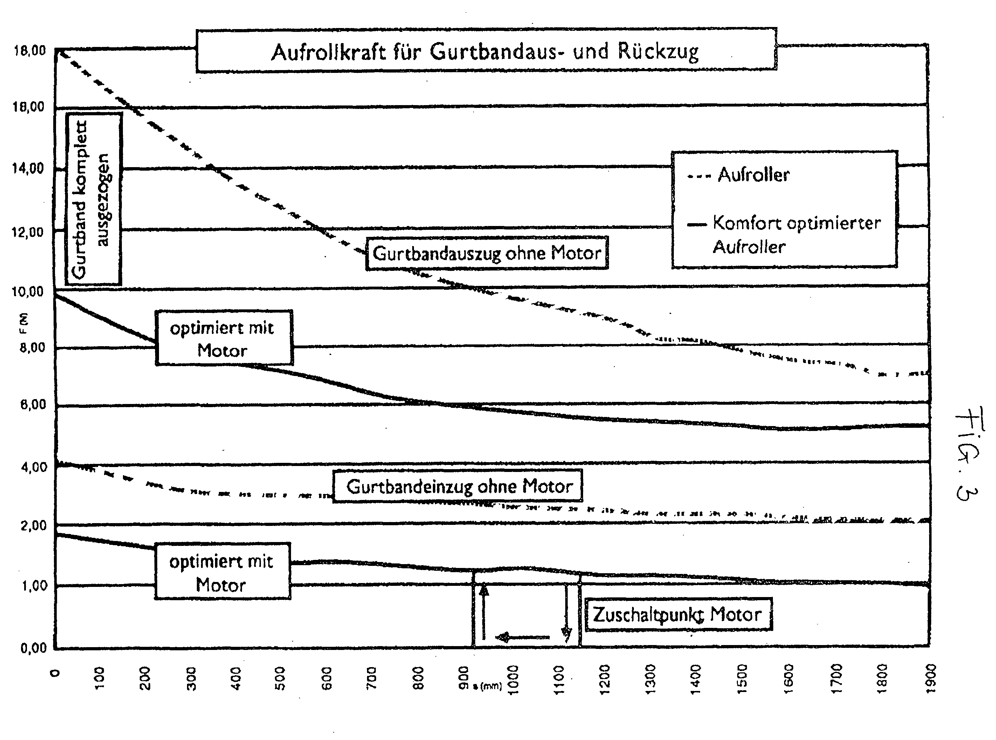

Ferner kann, wie es in Fig. 4 dargestellt ist, ein Kennfeld für die Gurtkraft erzeugt werden, wobei auf der Abszisse der Gurtbandauszug nach dem Straffen und auf der Ordinate die vom Gurtband vermittelte Rückhaltekraft aufgetragen sind. Das Kennfeld wird aus drei Parameters gewonnen nämlich dem Unfallverlauf, dem Insassengewicht und der Sitzposition des Fahrzeugsitzes in Längsrichtung des Fahrzeugs. Die Parameter "Insassengewicht" und "Sitzposition" ergeben sich vor einem Unfallgeschehen. Der "Unfallverlauf" wird mit Hilfe eines oder mehrerer Beschleunigungssensoren, welche den zeitlichen Verlauf der während des Unfallgeschehens wirkenden Beschleunigung bzw. Beschleunigungen messen, erfaßt. In Abhängigkeit von den jeweiligen Parametern werden jeweils zugeordnete Kraftkennfelder in KN gegenüber dem Gurtauszug in mm ermittelt und zum Kennfeld der Gurtkraft (KN) gegenüber dem Gurtauszug (mm) kombiniert. Die Kennfeldbestimmung der Gurtkraft erfolgt mithin endgültig während des Unfallverlaufs und ist an diesen angepaßt. Dieses Kennfeld wird fahrzeuginsassenbezogen in einem Speicher 45 (Fig. 1) gespeichert, so daß es jederzeit zur Bildung eines Steuersignals für den Elektromotor 2 durch die Auswerte- und Steuereinrichtung 42 zur Verfügung steht. Die Verstellbewegung ist reversibel, so daß auch während des Unfallgeschehens in Abhängigkeit von der Unfallschwere eine Regulierung des Kraftniveaus des Gurtkraftbegrenzers 5 möglich ist.

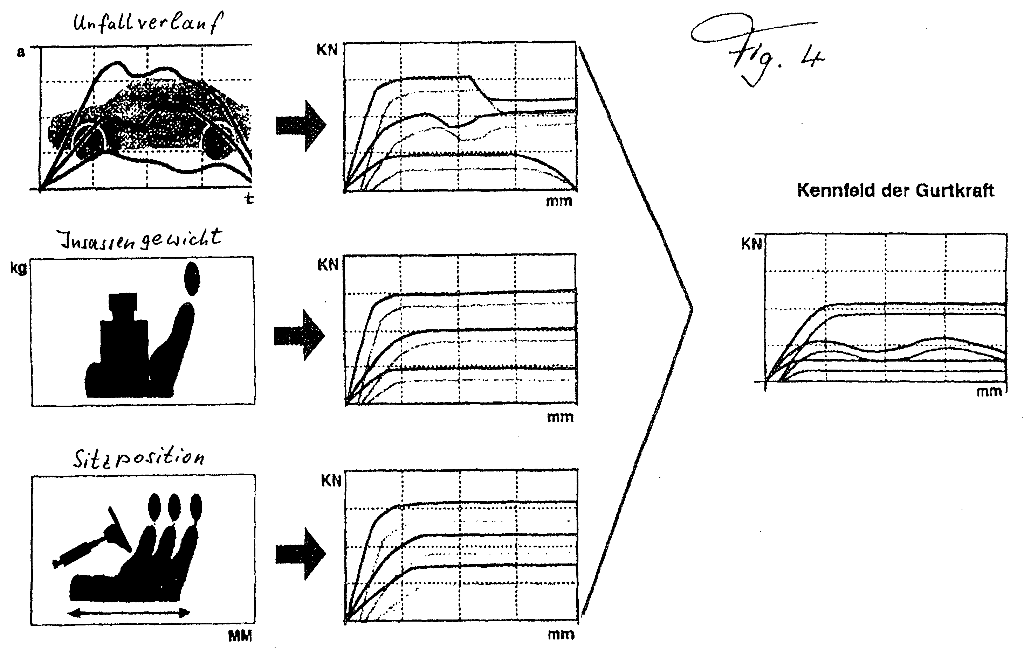

Bei einem Unfallgeschehen wird nach dem Straffen des Sicherheitsgurtes eine Unfallinsassenverzögerungsbelastung durch den Gurtkraftbegrenzer 5 erreicht, welche in Fig. 5 dargestellt ist. Der zeitliche Ablauf dieser Verzögerungsbelastung kann durch entsprechende Verstellung des Gurtkraftbegrenzers 5 mit Hilfe des Elektromotors 2 erreicht werden. Der Elektromotor wird hierzu von der Auswerte- und Steuereinrichtung 42 gesteuert, wobei die Steuerung in Abhängigkeit von dem in einem Speicher 46 gespeicherten zeitlichen Ablauf der Verzögerungsbelastung erfolgt.

Von der zentralen Auswerte- und Steuereinrichtung 42 wird ferner eine dem jeweiligen Fahrzeugsitz, beispielsweise dem Beifahrersitz, zugeordnete Airbageinrichtung 7 gesteuert. Hierbei kann berücksichtigt werden, daß die Airbageinrichtung 7 nur oberhalb einer bestimmten Fahrzeuggeschwindigkeit, beispielsweise 60 km/h, welche ein Parameter für die Unfallschwere ist, aktiviert wird. Die bei der Gurtkraftbegrenzung nachlassende Rückhaltewirkung (abfallende Flanke der in Fig. 5 dargestellten Belastungskurve) ergibt sich dann, wenn für den zugeordneten Sitz, insbesondere belegten Sitz, z.B. Beifahrersitz, ein von der Auswerte-Steuereinrichtung 42 aus den Sensorsignalen bestimmtes Airbagzündersignal vorliegt und der sich vorverlagernde Körper des Fahrzeuginsassen in den aufgeblasenen Airbag nach etwa 60 msec (Fig. 5) eintauchen kann. Durch die Auswerte- und Steuereinrichtung 42 werden das Betätigen der Airbageinrichtung 7 und die nach dem Straffen zur Wirkung kommende Verzögerungsbelastung des Gurtkraftbegrenzers 5 zeitlich aufeinander abgestimmt. Die obere Belastungskurve A in Fig. 5 entspricht der Gurtkraftbelastung ohne Kraftbegrenzung und die untere Belastungskurve B entspricht der Gurtkraftbegrenzung mit Gurtkraftbegrenzer.

In der dritten Getriebeschaltposition wird beim Ausführungsbeispiel der Fig. 2 das Einstellmittel 27 von der entsprechend durch die Auswerte- und Steuereinrichtung 42 angesteuerten Betätigungseinrichtung 38 betätigt. Hierdurch wird eine Antriebsdrehverbindung zwischen dem ersten Getrieberad 13 und der Wickelwelle 1 hergestellt. Diese Verbindung erfolgt durch den Zahneingriff der beiden miteinander verbundenen Zahnkränze 29 und 30 bei der Ausführungsform der Fig. 2 in die Verzahnungen 39 und 41. Durch diese Verbindung wird das vom Elektromotor 2 erzeugte Drehmoment über das Getrieberad 13 und das Einstellmittel 27 (Fig. 2) auf die Wickelwelle 1 übertragen. Diese dritte Getriebeschaltposition wird dann eingestellt, wenn durch einen Crashsensor oder einen Pre-Crash-Sensor ein entsprechendes Signal an die Auswerte- und Steuereinrichtung 42 geliefert wird. Die Einrichtung 42 steuert dann die Betätigungseinrichtung 38 zur Betätigung des zweiten Einstellmittels 27 (Fig. 2) an. Durch das Pre-Crash-Sensorsignal kann eine Unfallfrüherkennung angezeigt werden. Dieses Signal kann beispielsweise gewonnen werden von einem Näherungssensor, mit welchem Relativgeschwindigkeiten zweier hintereinander fahrender Fahrzeuge festgestellt werden. Die aus dem Multifunktionsgurtaufroller 6 bestehende Baueinheit wird durch die dritte Getriebeschaltposition in Strafferbereitschaft gebracht. Es kann dabei auch bereits eine Positionierungsstraffung in Form eines leichten Zurückziehens des Gurtbandes durch Betätigen des Elektromotors 2 herbeigeführt werden. Eine derartige Positionierungsstraffung kann auch dann durchgeführt werden, wenn ein Out-Off-Sensorsignal der Auswerte- und Steuereinrichtung 42 zugeleitet wird. Ein solches Signal wird dann gebildet, wenn der Fahrzeuginsasse sich seitlich aus der normalen Sitzposition, beispielsweise beim Schlafen, bewegt hat. Dieses Signal kann beispielsweise durch mehrere am Fahrzeugsitz vorgesehene Sensoren, die auch das Insassengewicht erfassen, erzeugt werden. Durch sanftes Anziehen des Gurtbandes kann dann der Fahrzeuginsasse wieder in die normale Sitzposition zurückgebracht werden. Diese Positionierungsstraffung kann auch dann erfolgen, wenn unterhalb der das Crashsensorsignal auslösenden Schwelle der Fahrzeuggeschwindigkeitsänderung eine Fahrzeuggeschwindigkeitsänderung stattfindet, sodaß eine Gurtvorstraffung oder Positionierungsstraffung durch den Elektromotor 2 auf die Wickelwelle 1 in der dritten Getriebeschaltposition übertragen wird. Eine derartige Gurtvorstraffung ist in der DE-A-43 32 205 beschrieben. Die Positionierungsstraffung ist reversibel und kann jederzeit in Abhängigkeit von der Fahrsituation wiederholt werden.

Nach dem Straffen wird eine Blockiereinrichtung mit einer oder zwei Blockierklinken 43 mit dem Einstellteil 21, insbesondere beidseitig der Wickelwelle, in Blockiereingriff gebracht. Hierzu kann das jeweilige Einstellteil 21 an seinem Außenumfang eine Verzahnung 48 aufweisen, in die die zugeordnete Blockierklinke 43, welche in bekannter Weise fahrzeug- oder gurtbandsensitiv von der Aufrollermechanik 20 gesteuert ist, eingreift.

Nach diesem Blockiereingriff tritt bei einem Unfallgeschehen die oben in Zusammenhang mit der zweiten Getriebeschaltstellung und den Fig. 4 und/oder Fig. 5 erläuterte Gurtkraftbegrenzung in Aktion.

Wie bereits in Zusammenhang mit der Gurtbandtragekomfort-Regulierung erläutert, kann nach dem Abgurten das Gurtband durch das vom Elektromotor 2 erzeugte Drehmoment in die Startposition aufgerollt werden, wobei die zuleltzt beschriebene dritte Getriebeschaltposition zur Anwendung kommt.

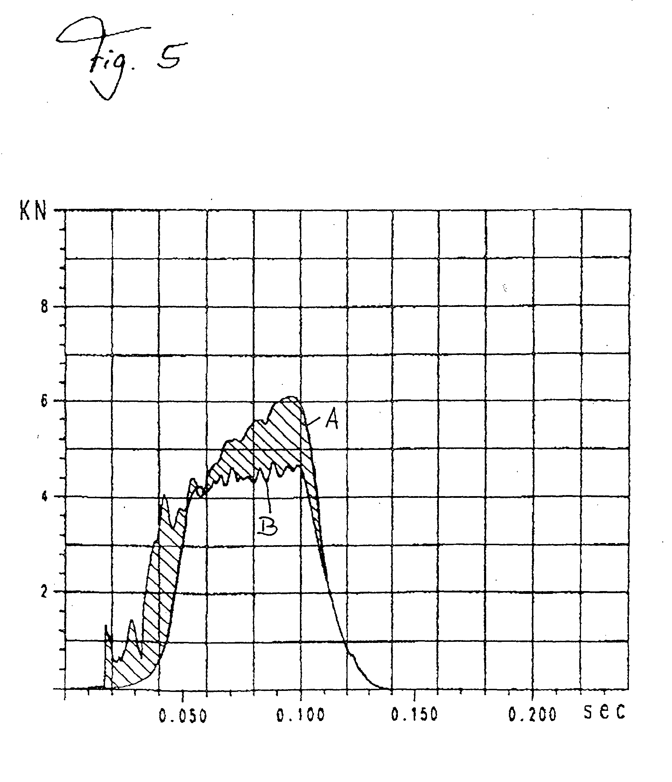

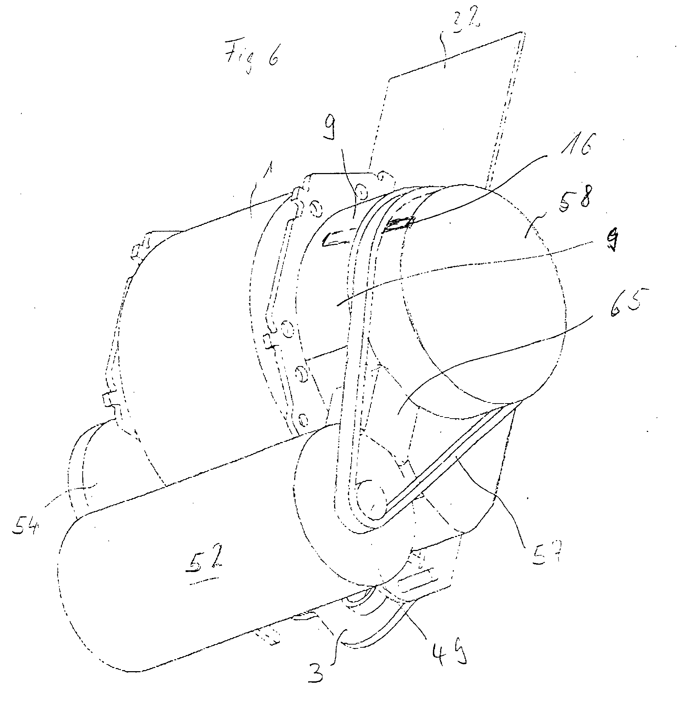

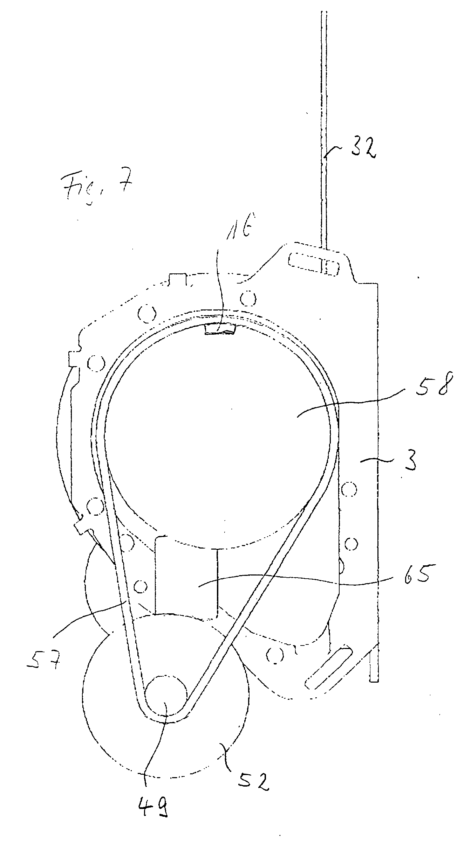

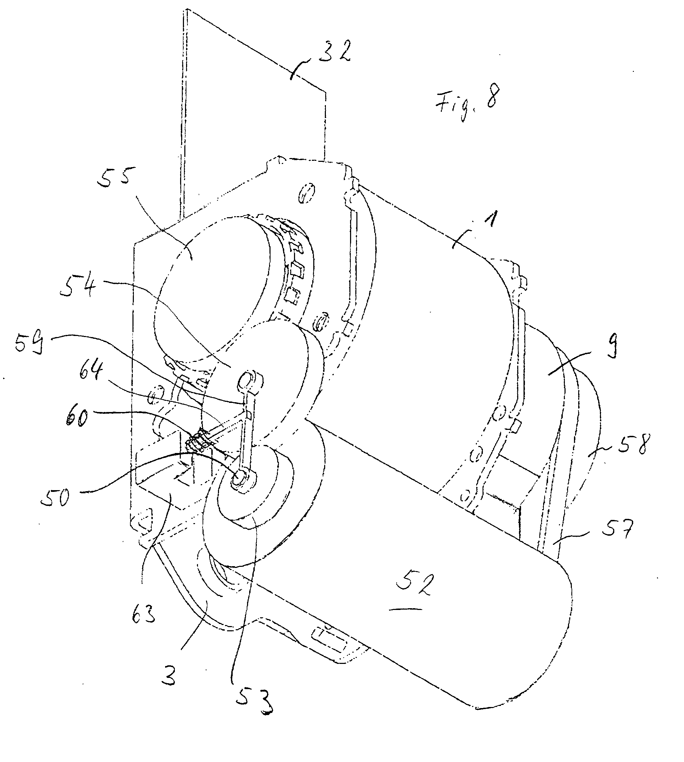

Bei dem in den Figuren 6 bis 10 dargestellten Ausführungsbeispiel werden für gleiche Bauteile gleiche Bezugsziffern wie im oben beschriebenen Ausführungsbeispiel verwendet.

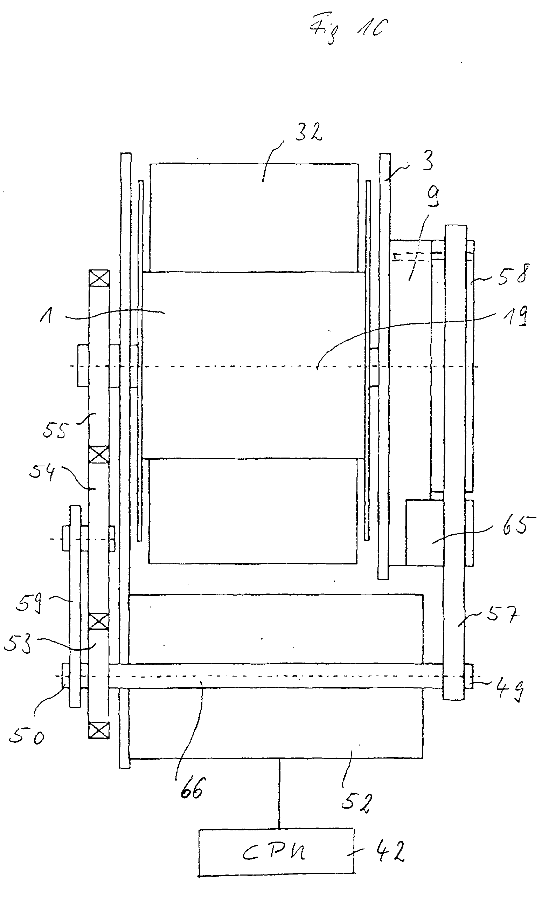

Bei dem in den Figuren 6 bis 10 dargestellten Ausführungsbeispiel wird ein Elektromotor 52 verwendet, welcher zwei Ausgangswellen 49 und 50 aufweist. Die Ausgangswellen 49 und 50 erstrecken sich im wesentlichen parallel zur Wickelwellenachse 19 und befinden sich an den beiden Endseiten des im wesentlichen zylindrisch ausgebildeten Elektromotors 52. Der Elektromotor 52 ist, wie z.B. in Fig. 10 gezeigt ist, am Rahmen 3 des Gurtaufrollers befestigt, so daß am Elektromotor 52 angreifende Reaktionskräfte über den Rahmen 3 in den Fahrzeugaufbau geleitet werden.

Die beiden Ausgangswellen 49 und 50 können separate Ausgangswellen sein, die getrennt von einander angesteuert werden können. Ferner können getrennte Antriebssysteme für die Ausgangswellen, insbesondere jeweils zugeordnete Motoranker, mit diesen Ausgangswellen verbunden sein.

In bevorzugter Weise werden jedoch die beiden Ausgangswellen 49 und 50 von überstehenden Wellenenden einer durchgehenden Motorwelle 66 gebildet werden (Fig. 10).

Die erste Ausgangswelle 49 ist über einen Riementrieb 57 in ständiger Antriebsverbindung mit einem Drehteil 58, welches fest mit der Einhängestelle 16 der Triebfeder 9 verbunden ist. Anstelle des Riementriebes 57 kann auch ein Zahnradgetriebe verwenden werden, welches die Antriebsbewegung der ersten Ausgangswelle 49 auf den Einhängepunkt 16 der Triebfeder 9 überträgt.

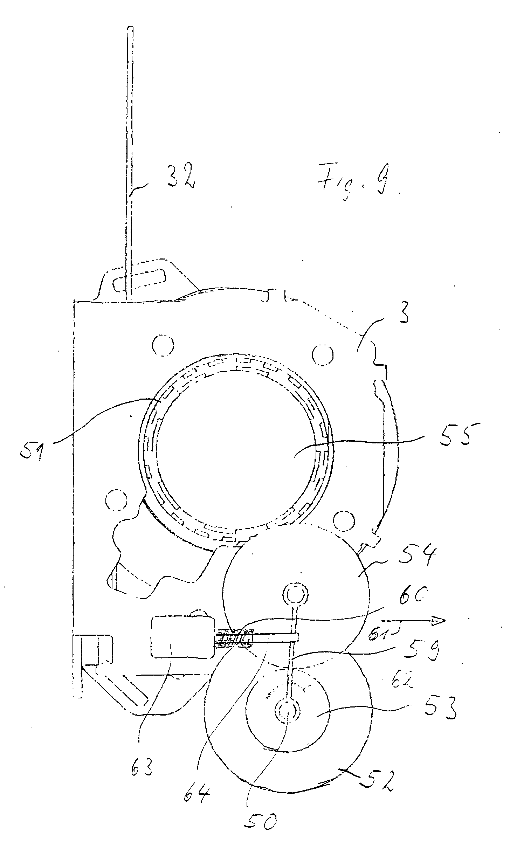

Die zweite Ausgangswelle 50 befindet sich auf der entgegengesetzten Seite des Elektromotors 52. Auf der zweiten Ausgangswelle 50 sitzt drehfest ein erstes Zahnrad 53. Dieses Zahnrad 53 kämmt mit einem zweiten Zahnrad 54. Das Zahnrad 54 ist über einen Träger 59 schwenkbar um die zweite Ausgangswelle 50 abgestützt. Durch eine Feder 60, welche auf den Träger 59 wirkt, wird das Zahnrad 54 außer Eingriff mit einem dritten Zahnrad 55, das drehfest mit der Wickelwelle 1 verbunden ist, gedrückt. Die Wirkrichtung der Feder 60 ist in der Fig. 9 durch einen Pfeil 61 dargestellt.

Die Antriebsverbindung zwischen der zweiten Ausgangswelle 50 und der Wickelwelle 1 wird durch die Drehbewegung, welche von der Ausgangswelle 50 auf das drehfest verbundene Zahnrad 52 übertragen wird, hergestellt. Die Drehbewegung des Zahnrades 53 in Antriebsrichtung (Pfeil 62) wird auf das zweite Zahnrad 54 übertragen, wobei gleichzeitig ein Drehmoment auf den Träger 59 entgegen der Kraft der Feder 60 (Pfeilrichtung 61) ausgeübt wird, so daß das Zahnrad 54 in Eingriff mit dem Zahnrad 55 gebracht wird (Fig. 9). Auf diese Weise wird selbsttätig die Antriebsverbindung zwischen der zweiten Ausgangswelle 50 und der Wickelwelle 1 hergestellt. Bei Motorstillstand koppelt sich das Zahnrad 54 automatisch aus, so daß die Antriebsverbindung zwischen der Ausgangswelle 50 und der Wickelwelle 1 getrennt ist.

Das Zahnrad 54 kann jedoch auch durch eine Betätigungseinrichtung 63, welche elektromagnetisch arbeiten kann, aus- und eingekuppelt werden. Hierzu kann die Betätigungseinrichtung 63 über einen Schubarm 64 auf den Träger 59 einwirken und das Zahnrad 54 aus- und einkuppeln.

Durch den von der zweiten Ausgangswelle 50 auf die Wickelwelle 1 übertragenen Drehantrieb kann die Gurtband-Rückwickelfunktion in die Parkposition des Gurtbandauszugs durchgeführt werden. Ferner ist es möglich, eine Precrash-Straffung bei gefährlicher Fahrsituation, beispielsweise dann, wenn das ABS-System des Fahrzeugs aktiviert wird, durchzuführen. Hierzu werden entsprechende Signale von der zentralen Steuereinrichtung (CPU) 42 verarbeitet und zur Ansteuerung des Elektromotors 52 ausgewertet. Zum Zurückbringen des Gurtbandes in die Parksituation kann beispielsweise beim Lösen des Gurtschlosses ein entsprechendes Signal erzeugt werden, das, wie beschrieben, zur Ansteuerung des Elektromotors 52 ausgewertet wird. Es wird dann die zweite Ausgangswelle 50 angetrieben und die Antriebsbewegung über das Getriebe, welches von den Zahnrädern 53 und 55 gebildet wird, auf die Wickelwelle 1 übertragen. Auch bei der Precrash-Straffung wird ein bei der Aktivierung des ABS-Systems erzeugtes Signal von der CPU 42 ausgewertet und der Elektromotor für den Antrieb der zweiten Ausgangswelle 50 angesteuert.

Um insbesondere für die Gurtband-Rückwickelfunktion in die Parkposition des Gurtbandes eine Abfrage der von der Wickelwelle 1 abgewickelten Gurtbandlänge zu erhalten, ist eine Abfrageeinrichtung 51 vorgesehen. Beim dargestellten Ausführungseispiel der Figuren 6 bis 10 befindet sich diese Abfrageeinrichtung 51 an der linken Wickelseite, an welcher sich das aus den Zahnrädern 53 und 55 gebildete Getriebe befindet. Die Abfrageeinrichtung 51 kann als exzentrisch zur Wickelwellenachse 19 und eine Achse 56 drehbarer Getriebering ausgebildet sein, wie er aus der DE-A-43 14 153 für eine Kindersicherung bei einem Gurtaufroller bekannt ist. Der Getriebering der Abfrageeinrichtung 51 wird beispielsweise durch eine Verlängerung des Zahnrades 55, das drehfest auf der Wickelwellenachse 19 sitzt, mit Untersetzung angetrieben. Auf diese Weise wird ein Taumelgetriebe gebildet, bei dem die Stellung des Getrieberinges, insbesondere die Winkelposition des Getrieberinges, ein Maß für die jeweils abgewickelte Gurtbandlänge darstellt. Dieses Maß kann elektrisch, elektronisch, optisch oder dergleichen abgetastet werden und für die Steuerung des von der zweiten Antriebswelle 50 erzeugten Aufwikkelbetriebes in der zentralen Steuereinrichtung (CPU) 42 ausgewertet werden.

An der Federseite kann ferner eine Abtasteinrichtung 65 vorgesehen sein, welche das Ende der Bandauszugsbewegung beim Anlegen des Sicherheitsgurtes feststellt und aus welcher auch das Maß der abgewickelten Gurtbandlänge abgeleitet werden kann. In Abhängigkeit von der jeweils abgewickelten Gurtbandlänge erfolgt dann die Anpassung an den Tragekomfort des angelegten Sicherheitsgurtes.

Für die Komfortanpassung des Tragekomforts des angelegten Sicherheitsgurtes ist die erste Ausgangswelle 49 auf der Seite der Triebfeder 9 mit dem Drehteil 58 verbunden, welches die Einhängestelle 16 der Triebfeder 9 aufweist. Die erste Antriebswelle 49 steht über ein Getriebe, welches beim Ausführungseispiel als Riementrieb 47 ausgebildet ist, in ständiger Antriebsverbindung mit dem Drehteil 58. Diese Antriebsverbindung kann jedoch auch durch ein Zahnradgetriebe hergestellt werden. Auch für die Komfortanpassung kann die von der Abfrageeinrichtung 51 ermittelte abgewickelte Gurtbandlänge in der Auswerte- und Steuereinrichtung 42 ausgewertet und ein entsprechendes Antriebssignal für die erste Ausgangswelle 49 des Elektromotors 52 erzeugt werden. Bei eingestelltem Tragekomfort kann die erste Ausgangswelle 49, z.B. durch eine nicht näher dargestellte Blockiereinrichtung oder ein Kurzschlußdrehmoment, das der Federkraft entgegenwirkt, blockiert werden.

Auf diese Weise lassen sich wesentliche Sicherheitsfunktionen des Gurtaufrollers allein durch Ansteuerung des Elektromotors 52, welcher in bevorzugter Weise am Gurtaufrollerrahmen 3 abgestützt bzw. befestigt ist und somit eine Baueinheit mit dem Gurtaufroller bildet, erreichen.

## Patentansprüche

1. Vorrichtung zum Aufrollen eines Sicherheitsgurtbandes auf eine in einem Rahmen (3) drehbar gelagerte Wickelwelle (1) in einem Kraftfahrzeug mit einem an die Wickelwelle (1) in beiden Drehrichtungen kuppelbaren Elektromotor (2), von welchem in Abhängigkeit von bestimmten Fahrsituationen einstellbare Drehmomente auf die Wickelwelle (1) zur Einwirkung bringbar sind, einem zwischen dem Elektromotor (2) und der Wickelwelle (1) angeordneten Getriebe (4), welches in Abhängigkeit von Sensorsignalen in unterschiedliche Schaltstellungen steuerbar ist,
**dadurch gekennzeichnet, dass** durch das Motordrehmoment in einer ersten Getriebeschaltposition der Gurtbandtragekomfort, in einer zweiten Getriebeschaltposition die Gurtkraftbegrenzung und in einer dritten Getriebeschaltposition die Gurtbandstraffung aktivierbar sind.

2. Vorrichtung nach Anspruch 1, **dadurch gekennzeichnet, daß** das Getriebe (4) in eine der drei Schaltpositionen einstellbar ist.

3. Vorrichtung nach Anspruch 1 oder 2, **dadurch gekennzeichnet, daß** bei einer Getriebeschaltposition mehrere unterschiedliche Drehmomente auf die Wickelwelle (1) übertragbar sind.

4. Vorrichtung nach einem der Ansprüche 1 bis 3, **dadurch gekennzeichnet, daß** in der ersten Getriebeschaltposition eine auf die Wickelwelle (1) einwirkende Federrückzugskraft einstellbar ist.

5. Vorrichtung nach Anspruch 4, **dadurch gekennzeichnet, daß** ein Einhängepunkt (16), an welchem eine auf die Wickelwelle (1) in Gurtbandaufrollrichtung einwirkende Triebfeder (9) sich an ihrem einen Ende gegenüber dem Rahmen (3) abstützt, verstellbar ist.

6. Vorrichtung nach Anspruch 4 oder 5, **dadurch gekennzeichnet, daß** das Getriebe (4) in Abhängigkeit des Sensorsignales, welches das Angurten angibt, in die erste Getriebeschaltposition steuerbar ist.

7. Vorrichtung nach einem der Ansprüche 1 bis 3, **dadurch gekennzeichnet, daß** in der zweiten Getriebeschaltposition ein zwischen dem Rahmen (3) und der Wikkelwelle (1) wirkender Gurtkraftbegrenzer (5) einstellbar ist.

8. Vorrichtung nach Anspruch 7, **dadurch gekennzeichnet, daß** der Gurtkraftbegrenzer (5) während eines Unfallgeschehens einstellbar und/oder vor dem Unfallgeschehen voreinstellbar ist.

9. Vorrichtung nach Anspruch 7 oder 8, **dadurch gekennzeichnet, daß** das Getriebe (4) nach dem Angurten und insbesondere nach der Einstellung des Gurtbandtragekomforts in die zweite Getriebeschaltposition steuerbar ist.

10. Vorrichtung nach einem der Ansprüche 7 bis 9, **dadurch gekennzeichnet, daß** in der zweiten Getriebeschaltposition zur Steuerung des Motordrehmoments bei der Einstellung der Gurtkraftbegrenzung eine Auswerte- und Steuereinrichtung (42) Sensorsignale empfängt, welche das Insassengewicht und/oder die Position des Kraftfahrzeugsitzes im Kraftfahrzeug und/oder eine Unfallfrüherkennung und/oder Unfallschwere und/oder eine Bremspedalbetätigung angeben.

11. Vorrichtung nach einem der Ansprüche 1 bis 3, **dadurch gekennzeichnet, daß** das Getriebe in eine dritte Schaltposition steuerbar ist, in welcher das Drehmoment des Elektromotors (2) auf die Wickelwelle (1) für einen Gurtbandrückzug, beim Straffen übertragbar ist.

12. Vorrichtung nach Anspruch 11, **dadurch gekennzeichnet, daß** das Drehmoment des Elektromotors (2) in der dritten Getriebeschaltstellung mit Überlast auf die Wickelwelle (1) übertragbar ist.

13. Vorrichtung nach Anspruch 11 oder 12, **dadurch gekennzeichnet, daß** zur Steuerung des Motordrehmoments die Auswerte- und Steuerschaltung (42) Sensorsignale auswertet, welche einen Unfall und/oder eine Unfallfrüherkennung und/oder eine Out-Off-Position des Insassen und/oder das Abgurten angeben.

14. Vorrichtung nach Anspruch 11, **dadurch gekennzeichnet, daß** das Motordrehmoment für das Straffen des Sicherheitsgurtes auf die Wickelwelle (1) vor einem Blockiereingriff einer am Rahmen (3) abgestützten Blockiereinrichtung (49) in ein Einstellteil (21) des Kraftbegrenzers (5) übertragbar ist.

15. Vorrichtung nach einem der Ansprüche 1 bis 14, **dadurch gekennzeichnet, daß** die vom Gurtkraftbegrenzer (5) ausgeübte Rückhaltekraft dann gesteuert nachläßt, wenn für einen dem Sicherheitsgurt zugeordneter Airbag (7) ein Zündsignal vorliegt.

16. Vorrichtung nach einem der Ansprüche 1 bis 15, **dadurch gekennzeichnet, daß** die Grundeinstellung des Gurtkraftbegrenzers (5) von dem Personengewicht und der Sitzposition des belegten Fahrzeugsitzes abhängt.

17. Vorrichtung zum Aufrollen eines Sicherheitsgurtbandes auf eine in einem Rahmen drehbar gelagerte Wickelwelle in einem Kraftfahrzeug mit einem an die Wikkelwelle kuppelbaren Elektromotor, von welchem in Abhängigkeit von bestimmten Fahrsituationen einstellbare Drehmomente auf die Wickelwelle zur Einwirkung bringbar sind, nach einem der Ansprüche 1 bis 16, **dadurch gekennzeichnet, daß** der Elektromotor (52) in Abhängigkeit von der jeweiligen Fahrsituation ansteuerbar ist und zwei Ausgangswellen (49, 50) aufweist, von denen eine erste Ausgangswelle (49) zur Einstellung der von der Triebfeder (9) auf die Wickelwelle (1) übertragenen Kraft dient und eine zweite Ausgangswelle (50) auf die Wickelwelle (1) eine Antriebskraft in Aufwickelrichtung überträgt.

18. Vorrichtung nach Anspruch 17, **dadurch gekennzeichnet, daß** die zweite Ausgangswelle (50) an der zur Triebfeder (9) entgegengesetzt liegenden Seite an der Wickelwelle (1) angreift.

19. Vorrichtung nach Anspruch 17 oder 18, **dadurch gekennzeichnet, daß** beide Ausgangswellen (49, 50) parallel zur Wickelwellenachse (19) angeordnet sind.

20. Vorrichtung nach einem der Ansprüche 17 bis 19, **dadurch gekennzeichnet, daß** jeweils nur eine der beiden Ausgangswellen (49, 50) angetrieben ist.

21. Vorrichtung nach einem der Ansprüche 17 bis 20, **dadurch gekennzeichnet, daß** beim Antrieb der ersten Ausgangswelle (49) die Antriebsverbindung zwischen der zweiten Ausgangswelle (50) und der Wickelwelle (19 getrennt ist.

22. Vorrichtung nach einem der Ansprüche 17 bis 21, **dadurch gekennzeichnet, daß** die beiden Ausgangswellen (49, 50) Wellenenden einer durchgehenden Motorwelle (66) sind.

23. Vorrichtung nach einem der Ansprüche 17 bis 22, **dadurch gekennzeichnet, daß** die von der Wickelwelle (1) abgewickelte Gurtbandlänge abfragbar ist.

24. Vorrichtung nach Anspruch 23, **dadurch gekennzeichnet, daß** zur Bestimmung der jeweils abgewickelten Gurtbandlänge eine sich mit der Wickelwelle (1) mit untersetzter Drehzahl mitdrehende Abfrageeinrichtung (51) vorgesehen ist, die eine von der jeweiligen abgewickelten Gurtbandlänge abhängige Drehwinkelposition einnimmt.

25. Vorrichtung nach einem der Ansprüche 17 bis 24, **dadurch gekennzeichnet, daß** der Antrieb der ersten Ausgangswelle (49) und/oder der zweiten Ausgangswelle (50) in Abhängigkeit von der von der Wickelwelle (1) abgewickelten Gurtbandlänge gesteuert ist.

26. Vorrichtung nach einem der Ansprüche 17 bis 25, **dadurch gekennzeichnet, daß** durch die erste Ausgangswelle (49) der Tragekomfort des angelegten Gurtbandes (32) einstellbar ist.

27. Vorrichtung nach einem der Ansprüche 17 bis 26, **dadurch gekennzeichnet, daß** die Wickelwelle (1) mit einer Precrash-Gurtstraffung in Abhängigkeit von der Aktivierung eines ABS-Systems des Fahrzeugs durch die zweite Ausgangswelle (50) beaufschlagbar ist.

28. Vorrichtung nach einem der Ansprüche 17 bis 27, **dadurch gekennzeichnet, daß** die erste Ausgangswelle (49) in ständiger Antriebsverbindung mit dem Einhängepunkt (16) der Triebfeder (9) steht.

29. Vorrichtung nach einem der Ansprüche 17 bis 28, **dadurch gekennzeichnet, daß** die zweite Ausgangswelle (50) über ein durch die Antriebsbewegung der zweiten Ausgangswelle (50) zuschaltbares Getriebe mit der Wickelwelle (1) kuppelbar ist.

30. Vorrichtung nach einem der Ansprüche 17 bis 29, **dadurch gekennzeichnet, daß** der Elektromotor (52) am Aufrollerrahmen (3) abgestützt ist.

31. Vorrichtung nach einem der Ansprüche 17 bis 30, **dadurch gekennzeichnet, daß** die erste Ausgangswelle (49) bei eingestelltem Trangekomfort blockierbar ist.

32. Vorrichtung nach einem der Ansprüche 18 bis 31, **dadurch gekennzeichnet, daß** beim Antrieb der Wickelwelle (1) durch die zweite Ausgangswelle (50) in Bandaufwickelrichtung die Einhängestelle (16) der Triebfeder (9) im Sinne einer Federkrafterhöhung mitverstellt wird.

## Claims

1. Device for retracting a seat belt webbing on a winding shaft (1) rotatably mounted in a frame (3) in a motor vehicle comprising an electric motor (2) which can be coupled to the winding shaft (1) in both directions of rotation and from which torques, which can be adjusted in dependence on certain driving situations, can be brought to act upon the winding shaft (1), a gear (4) arranged between the electric motor (2) and the winding shaft (1), which can be controlled in dependence on sensor signals in various switch positions, **characterised in that**, due to the motor torque, in a first gear switch position the belt webbing comfort in wear can be activated, in a second gear switch position the belt force limitation can be activated, and in a third gear switch position the belt webbing tightening can be activated.

2. Device according to Claim 1, **characterised in that** the gear (4) can be adjusted into one of the three switch positions.

3. Device according to Claim I or 2, **characterised in that** in a gear switch position, several different torques can be transferred onto the winding shaft (1).

4. Device according to one of Claims 1 to 3, **characterised in that** in the first gear switch position a spring retracting force acting upon the winding shaft (1) can be adjusted.

5. Device according to Claim 4, **characterised in that** a fixing point (16), against which a motive spring (9) acting upon the winding shaft (1) in the belt webbing retracting direction is supported at its one end opposite the frame (3), can be adjusted.

6. Device according to Claim 4 or 5, **characterised in that** the gear (4) can be directed into the first gear switch position in dependence on the sensor signal indicating the seat belt placement.

7. Device according to one of Claims 1 to 3, **characterised in that** in the second gear switch position a belt force limiter (5) acting between the frame (3) and the winding shaft (1) can be adjusted.

8. Device according to Claim 7, **characterised in that** the belt force limiter (5) can be adjusted during a crash and/or prior to the crash.

9. Device according to Claim 7 or 8, **characterised in that** the gear (4) can be directed into the second gear switch position after the seat belt placement and in particular after the adjustment of the belt webbing comfort in wear.

10. Device according to one of Claims 7 to 9, **characterised in that** in the second gear switch position, for the purpose of controlling the motor torque during the adjustment of the belt force limitation, an evaluation and control device (42) receives sensor signals, which indicate the occupant weight and/or the position of the motor vehicle seat within the motor vehicle and/or an early crash recognition and/or the severity of the accident and/or a brake pedal application.

11. Device according to one of Claims 1 to 3, **characterised in that** the gear can be directed into a third switch position, in which the torque of the electric motor (2) can be transferred onto the winding shaft (1) for a belt webbing retraction, during the tightening process.

12. Device according to Claim 11, **characterised in that** the torque of the electric motor (2) can be transferred with overload onto the winding shaft (1) in the third gear switch position.

13. Device according to Claim 11 or 12, **characterised in that**, for the purpose of controlling the motor torque, the evaluation and control device (42) evaluates sensor signals, which indicate a crash and/or an early crash recognition and/or an Out-Of-Position of the occupant and/or the removal of the seat belt.

14. Device according to Claim 11, **characterised in that**, for the purpose of tightening the seat belt, the motor torque can be transferred onto the winding shaft (1) prior to a locking engagement of a locking device (49) supported on the frame (3) in an adjustment part (21) of the force limiter (5).

15. Device according to one of Claims 1 to 14, **characterised in that** the restraining force exerted by the belt force limiter (5) is reduced in a controlled manner if an ignition signal is present for an airbag (7) assigned to the seat belt.

16. Device according to one of Claims 1 to 15, **characterised in that** the basic adjustment of the belt force limiter (5) is dependent on the occupant weight and the seating position of the occupied vehicle seat.

17. Device for retracting a seat belt webbing on a winding shaft rotatably mounted in a frame in a motor vehicle comprising an electric motor which can be coupled to the winding shaft and from which torques, which can be adjusted in dependence on certain driving situations, can be brought to act upon the winding shaft according to one of Claims 1 to 16, **characterised in that** the electric motor (52) can be controlled in dependence on each driving situation and comprises two output shafts (49, 50), of which a first output shaft (49) is used to adjust the force transferred from the motive spring (9) onto the winding shaft (1) and of which a second output shaft (50) transfers a drive force onto the winding shaft (1) in the winding direction.

18. Device according to Claim 17, **characterised in that** the second output shaft (50) engages the winding shaft (1) at the side opposite the motive spring (9).

19. Device according to Claim 17 or 18, **characterised in that** the two output shafts (49, 50) are arranged parallel to the winding shaft axis (19).

20. Device according to one of Claims 17 to 19, **characterised in that** in each case only one of the two output shafts (49, 50) is driven.

21. Device according to one of Claims 17 to 20, **characterised in that** during the drive of the first output shaft (49) the drive connection between the second output shaft (50) and the winding shaft (1) is interrupted.

22. Device according to one of Claims 17 to 21, **characterised in that** the two output shafts (49, 50) are shaft ends of a continuous motor shaft (66).

23. Device according to one of Claims 17 to 22, **characterised in that** the belt webbing length unwound from the winding shaft (1) can be monitored.

24. Device according to Claim 23, **characterised in that** for determining in each case the unwound belt webbing length, a monitoring device (51), co-rotating with the winding shaft (1) at a reduced rotational speed, is foreseen, assuming a rotational angle position dependent in each case on the unwound belt webbing length.

25. Device according to one of Claims 17 to 24, **characterised in that** the drive of the first output shaft (49) and/or the second output shaft (50) is controlled in dependence on the belt webbing length unwound from the winding shaft (1).

26. Device according to one of Claims 17 to 25, **characterised in that** the comfort in wear of the worn belt webbing (32) can be adjusted by the first output shaft (49).

27. Device according to one of Claims 17 to 26, **characterised in that** the winding shaft (1) can undergo a pre-crash belt tightening in dependence on the activation of an ABS system of the vehicle by means of the second output shaft (50).

28. Device according to one of Claims 17 to 27, **characterised in that** the first output shaft (49) is in a constant drive connection with the fixing point (16) of the motive spring (9).

29. Device according to one of Claims 17 to 28, **characterised in that** the second output shaft (50) can be coupled to the winding shaft (1) via a gear which can be connected by the drive movement of the second output shaft (50).

30. Device according to one of Claims 17 to 29, **characterised in that** the electric motor (52) is supported on the retractor frame (3).

31. Device according to one of Claims 17 to 30, **characterised in that** the first output shaft (49) can be locked in the case of an adjusted level of comfort in wear.

32. Device according to one of Claims 18 to 31, **characterised in that** during the drive of the winding shaft (1), the fixing point (16) of the motive spring (9) is also adjusted by the second output shaft (50) in the webbing retraction direction in the sense of a spring force increase.

## Revendications

1. Dispositif d'enroulement d'une sangle d'une ceinture de sécurité sur un arbre d'enroulement (1) agencé par rotation dans un cadre (3) dans un véhicule automobile, comportant un moteur électrique (2) pouvant être accouplé dans les deux sens de rotation à l'arbre d'enroulement (1), pouvant appliquer des couples de rotation réglables à l'arbre d'entraînement (1) en fonction des situations de roulement définies, un engrenage (4) agencé entre le moteur électrique (2) et l'arbre d'enroulement (1), pouvant être entraîné dans différentes positions de commutation sur la base de signaux de détection,
**caractérisé en ce que** le couple de rotation du moteur permet d'ajuster le confort au porter de la sangle de la ceinture dans une première position de commutation de l'engrenage, la limitation de la force de la ceinture dans une deuxième position de commutation de l'engrenage et la tension de la sangle de la ceinture dans une troisième position de commutation de l'engrenage.

2. Dispositif selon la revendication 1, **caractérisé en ce que** l'engrenage (4) peut être réglé dans une des trois positions de commutation.

3. Dispositif selon l'une des revendications 1 ou 2, **caractérisé en ce que** plusieurs couples de rotation différents peuvent être transmis à l'arbre d'enroulement (1) dans une position de commutation de l'engrenage.

4. Dispositif selon l'une des revendications 1 à 3, **caractérisé en ce qu'**une force de rappel du ressort appliquée à l'arbre d'enroulement (1) est réglable dans la première position de commutation de l'engrenage.

5. Dispositif selon la revendication 4, **caractérisé en ce qu'**un point d'accrochage (16) au niveau duquel un ressort-moteur (9) agissant sur l'arbre d'enroulement (1) dans le sens de l'enroulement de la sangle de la ceinture est supporté avec une de ses extrémités par rapport au cadre (3).

6. Dispositif selon les revendications 4 ou 5, **caractérisé en ce que** l'engrenage (4) peut être entraîné dans la première position de commutation de l'engrenage en fonction du signal de détection indiquant la mise de la ceinture.

7. Dispositif selon l'une des revendications 1 à 3, **caractérisé en ce qu'**un limiteur de la force de la ceinture (5) agissant entre le cadre (3) et l'arbre d'enroulement (1) est réglable dans la deuxième position de commutation de l'engrenage.

8. Dispositif selon la revendication 7, **caractérisé en ce que** le limiteur de la force de la ceinture (5) peut être réglé au cours d'une collision et/ou réglé d'avance avant la collision.

9. Dispositif selon les revendications 7 ou 8, **caractérisé en ce que** l'engrenage (4) peut être entraîné dans la deuxième position de commutation de l'engrenage après la mise de la ceinture, en particulier après le réglage du confort au porter de la ceinture.

10. Dispositif selon l'une des revendications 7 à 9, **caractérisé en ce que** dans la deuxième position de commutation de l'engrenage, une unité d'évaluation et de commande (42) reçoit des signaux de détection en vue de la commande du couple de rotation du moteur lors du réglage de la limitation de la force de la ceinture, ces signaux indiquant le poids de l'occupant et/ou la position du siège du véhicule dans le véhicule et/ou une détection précoce de la collision et/ou la gravité de la collision et/ou un actionnement de la pédale de frein.

11. Dispositif selon l'une des revendications 1 à 3, **caractérisé en ce que** l'engrenage peut être entraîné dans une troisième position de commutation, dans laquelle le couple de rotation du moteur électrique (2) peut être transmis à l'arbre d'entraînement (1) en vue d'un rappel de la sangle de la ceinture lors de la tension.

12. Dispositif selon la revendication 11, **caractérisé en ce que** le couple de rotation du moteur électrique (2) peut être transmis avec une surcharge à l'arbre d'entraînement (1) dans la troisième position de commutation de l'engrenage.

13. Dispositif selon les revendications 11 ou 12, **caractérisé en ce qu'**en vue de la commande du couple de rotation du moteur, l'unité d'évaluation et de commande (42) évalue des signaux de détection, indiquant une collision et/ou la détection précoce d'une collision et /ou une position décalée de l'occupant et/ou l'enlèvement de la ceinture.

14. Dispositif selon la revendication 11, **caractérisé en ce que** le couple de rotation du moteur peut être transmis en vue de la tension de la ceinture de sécurité sur l'arbre d'enroulement (1) avant un engagement par blocage d'un dispositif de blocage (49) supporté sur le cadre (3) dans un élément de réglage (21) du limiteur de la force (5).

15. Dispositif selon l'une des revendications 1 à 14, **caractérisé en ce que** la force de retenue exercée par le limiteur de la force de la ceinture (5) est réduite de manière contrôlée en présence d'un signal d'allumage d'un coussin d'air (7) affecté à la ceinture de sécurité.

16. Dispositif selon l'une des revendications 1 à 15, **caractérisé en ce que** le réglage de base du limiteur de la force de la ceinture (5) dépend du poids de la personne et de la position assise du siège occupé du véhicule.

17. Dispositif d'enroulement d'une sangle d'une ceinture de sécurité sur un arbre d'enroulement supporté par rotation dans un cadre dans un véhicule automobile, comportant un moteur électrique pouvant être accouplé à l'arbre d'enroulement, permettant d'exercer des couples de rotation réglables sur l'arbre d'enroulement en fonction de situations de roulement définies selon l'une des revendications 1 à 16, **caractérisé en ce que** le moteur électrique (52) peut être entraîné en fonction de la situation de roulement respective et comporte deux arbres de sortie (49, 50), un premier arbre de sortie (49) servant au réglage de la force transmise par le ressort-moteur (9) à l'arbre d'enroulement (1) et un deuxième arbre de sortie (50) transmettant une force d'entraînement dans le sens de l'enroulement à l'arbre d'enroulement (1).

18. Dispositif selon la revendication 17, **caractérisé en ce que** le deuxième arbre de sortie (50) s'engage dans l'arbre d'enroulement (1) sur le côté opposé au ressort-moteur (9).

19. Dispositif selon les revendications 17 ou 18, **caractérisé en ce que** les deux arbres de sortie (49, 50) sont agencés parallèlement à l'axe de l'arbre d'enroulement (19).

20. Dispositif selon l'une des revendications 17 à 19, **caractérisé en ce qu'**un seul des deux arbres de sortie (49, 50) est respectivement entraîné.

21. Dispositif selon l'une des revendications 17 à 20, **caractérisé en ce que** l'entraînement du premier arbre de sortie (49) entraîne une interruption de la liaison par entraînement entre le deuxième arbre de sortie (50) et l'arbre d'enroulement (19).

22. Dispositif selon l'une des revendications 17 à 21, **caractérisé en ce que** les deux arbres de sortie (49, 50) sont constitués par des extrémités d'arbre d'un arbre de moteur continu (66).

23. Dispositif selon l'une des revendications 17 à 22, **caractérisé en ce que** la longueur de la sangle de la ceinture déroulée de l'arbre d'enroulement (1) peut être explorée.

24. Dispositif selon la revendication 23, **caractérisé en ce qu'**un dispositif d'exploration (51) tournant à une vitesse démultipliée avec l'arbre d'enroulement (1) sert à la détermination de la longueur de la sangle de la ceinture respectivement déroulée, ce dispositif assumant une position d'angle de rotation dépendant de la longueur respectivement déroulée de la sangle de la ceinture.

25. Dispositif selon l'une des revendications 17 à 24, **caractérisé en ce que** l'entraînement du premier arbre de sortie (49) et/ou du deuxième arbre de sortie (50) est commandé en fonction de la longueur de la sangle de la ceinture déroulée de l'arbre d' enroulement (1).

26. Dispositif selon l'une des revendications 17 à 25, **caractérisé en ce que** le premier arbre de sortie (49) permet de régler le confort au porter de la sangle de la ceinture (32).

27. Dispositif selon l'une des revendications 17 à 26, **caractérisé en ce que** l'arbre d'enroulement (1) peut être soumis à une tension pré-collision de la ceinture par le deuxième arbre d'entraînement (50), en fonction de l'actionnement d'un système ABS du véhicule.

28. Dispositif selon l'une des revendications 17 à 27, **caractérisé en ce que** le premier arbre de sortie (49) est relié de manière permanente par entraînement au point d'accrochage (16) du ressort-moteur (9).

29. Dispositif selon l'une des revendications 17 à 28, **caractérisé en ce que** le deuxième arbre de sortie (50) peut être accouplé à l'arbre d'enroulement (1) par un engrenage raccordé par le mouvement d'entraînement du deuxième arbre de sortie (50).

30. Dispositif selon l'une des revendications 17 à 29, **caractérisé en ce que** le moteur électrique (52) est supporté sur le cadre de l'enrouleur (3).

31. Dispositif selon l'une des revendications 17 à 30, **caractérisé en ce que** le premier arbre de sortie (49) peut être bloqué après le réglage de confort.

32. Dispositif selon l'une des revendications 18 à 31, **caractérisé en ce que** l'entraînement de l'arbre d'enroulement (1) par le deuxième arbre de sortie (50) en direction de l'enroulement de la sangle entraîne aussi un réglage du point d'accrochage du ressort-moteur (9) dans le sens d'un accroissement de la force du ressort.
